(19) Europäisches Patentamt / European Patent Office / Office européen des brevets

(11) **EP 3 029 090 B1**

(12) **EUROPEAN PATENT SPECIFICATION**

(45) Date of publication and mention
of the grant of the patent:
**29.05.2019 Bulletin 2019/22**

(21) Application number: **13890566.6**

(22) Date of filing: **31.07.2013**

(51) Int Cl.:
***C08J 5/18*** (2006.01)     ***C03C 27/12*** (2006.01)
***C08L 29/14*** (2006.01)

(86) International application number:
**PCT/JP2013/070770**

(87) International publication number:
**WO 2015/015601 (05.02.2015 Gazette 2015/05)**

(54) **POLYVINYL ACETAL FILM EXCELLENT IN TRANSPARENCY AND SUPRESSING THERMAL CRACKING PHENOMENON**

POLYVINYLACETALFOLIE MIT HERAUSRAGENDER TRANSPARENZ UND RESISTENZ GEGEN HEISSRISSPHÄNOMEN

FILM DE POLY(ACÉTAL DE VINYLE) AYANT UNE TRANSPARENCE ET UNE RÉSISTANCE AU PHÉNOMÈNE DE FISSURATION THERMIQUE EXCEPTIONNELLES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**08.06.2016 Bulletin 2016/23**

(73) Proprietor: **Kuraray Co., Ltd.**
**Kurashiki-shi, Okayama 710-0801 (JP)**

(72) Inventors:
• **YUI Taiga**
**Kurashiki-shi**
**Okayama 713-8550 (JP)**
• **KUSUDOU Takeshi**
**Kurashiki-shi**
**Okayama 713-8550 (JP)**
• **TAKASHITA Sachiko**
**Kurashiki-shi**
**Okayama 710-0801 (JP)**
• **ASADA Mitsunori**
**Kurashiki-shi**
**Okayama 710-0801 (JP)**

(74) Representative: **Müller-Boré & Partner**
**Patentanwälte PartG mbB**
**Friedenheimer Brücke 21**
**80639 München (DE)**

(56) References cited:
**EP-A- 1 233 007          EP-A1- 1 842 647**
**EP-A1- 1 842 653         EP-A1- 1 953 829**
**WO-A1-95/19885           WO-A1-99/44821**
**WO-A1-2005/005123        WO-A1-2010/095479**
**WO-A1-2013/011872        DE-A1- 19 951 444**
**JP-A- 2012 031 030       JP-A- 2012 092 202**
**JP-A- 2013 010 671**

**EP 3 029 090 B1**

## Description

The present invention relates to a polyvinyl acetal film. More specifically, the present invention relates to a polyvinyl acetal film which has excellent transparency and adhesion to glass, and hardly causes a thermal cracking phenomenon, when a laminated glass is formed.

A polyvinyl acetal represented by polyvinyl butyral has excellent adhesion to and compatibility with various organic and inorganic substrates, and has excellent solubility in an organic solvent. The polyvinyl acetal is widely used as various adhesives, a binder for ceramics, various inks, paints, and the like, or an interlayer film for safety glass.

Among these uses, a film containing a polyvinyl acetal and a plasticizer has excellent adhesion to glass, transparency, mechanical strength, and flexibility, and therefore is widely used as an interlayer film for laminated glass.

When a laminated glass is formed, transparency and glass adhesion of the interlayer film for laminated glass are influenced by a state of a surface thereof. However, usually, a form to vent air generated between glass and a film is formed by an emboss processing, and the interlayer film for laminated glass is manufactured by laminating the glass and the film by thermal pressure-bonding (for example, refer to Patent Literature 1).

Such a laminated glass has poor adhesion between glass and a film due to an influence by wrinkles, cracks, voids, and unevenness remaining in an interface. When glass has a significant temperature difference between a high-temperature portion exposed to the sunlight and a peripheral low-temperature portion due to an imbalance of the bonding surface between the glass and the film, thermal stress is generated, and a thermal cracking phenomenon to break glass may occur. The thermal cracking phenomenon has been discussed in many literatures. However, it is necessary to use a reinforced glass for a laminated glass or to perform processing to glass, as in a wired glass. Therefore, use as laminated glass is limited (for example, refer to Patent Literature 2).

Patent Literature 3 describes a method for manufacturing solar modules by a roll laminating method. Patent Literature 4 discloses a method for production of a single side embossed sheet on the basis of partially acetalized polyvinyl alcohol. Patent Literature 5 describes a method of manufacturing embossed films of partially acetalized polyvinylalcohol. Patent Literature 6 discloses an interlayer for a laminated glass which does not give rise to the moire phenomenon. Patent Literature 7 describes a method and film for producing laminated safety glass panes. Patent Literature 8 describes a method for the production of films based on polymeric materials having a structured surface. Patent Literature 9 discloses a rough-surfaced interlayer with a regular roughness surface pattern on each side to optimize deairing while avoiding moiré effects. Patent Literature 10 describes a laminar structure comprised of at least one layer of glass and a sheet of plasticized PVB containing an adhesion control agent.

Patent Literature 1: JP H06-127983 A

Patent Literature 2: JP 2004-076458 A

Patent Literature 3: EP 1 953 829 A1

Patent Literature 4: EP 1 842 647 A1

Patent Literature 5: EP 1 842 653 A1

Patent Literature 6: EP 1 233 007 A1

Patent Literature 7: DE 199 51 444 A1

Patent Literature 8: WO 2005/005123 A1

Patent Literature 9: WO 95/19885 A1

Patent Literature 10: WO 99/44821 A1

The present invention solves the above problems and an object thereof is to provide a polyvinyl acetal film which has excellent transparency and can suppress a thermal cracking phenomenon.

The present inventors made intensive studies in order to solve the above problems. As a result, the present inventors have found that a polyvinyl acetal film satisfying a specific requirement has excellent transparency and hardly causes a thermal cracking phenomenon, and have completed the present invention. That is, the above object is achieved by providing an interlayer film for laminated glass in which at least one surface of the film has a ten-point average surface roughness Rz of 30 $\mu$m or more and a ratio between a composite modulus (GPa) of the highest part in a convex part and a composite modulus (GPa) of the lowest part in a concave part on a surface of a film on a side in contact with glass, calculated by a nanoindentation measurement using a scanning probe microscope (hereinafter, abbreviated as "SPM") is 0.90 or less, when a laminated glass is formed. In addition, the above object is achieved by providing a polyvinyl acetal film in which a ratio between a hardness (GPa) of the highest part in the convex part and a hardness (GPa) of the lowest part in the concave part is 0.90 or less.

The polyvinyl acetal film of the present invention has a difference in a composite modulus between a convex part and a concave part on a surface thereof. When the polyvinyl acetal film adheres to glass, the convex part having a lower composite modulus is deformed relatively more easily than the concave part. During thermal pressure-bonding, the polyvinyl acetal film releases an air layer generated between the glass and the film, but the convex part is deformed preferentially. Glass adhesion is thereby held. Therefore, it is possible to easily manufacture a laminated glass having little wrinkles, cracks, voids, and unevenness remaining in an interface. In addition, there is no adhesion unevenness in an interface between the glass and the film. Therefore, it is possible to obtain a laminated glass having little thermal stress.

Fig. 1 illustrates an example of an indentation image after a probe is press-fitted when a polyvinyl acetal film obtained in Example is subjected to a nanoindentation measurement using an SPM.
Fig. 2 illustrates an example of a load-displacement curve when a polyvinyl acetal film obtained in Example is subjected to the nanoindentation measurement using the SPM.
Fig. 3 illustrates an example of a diagram illustrating a surface of a film of a polyvinyl acetal film according to an embodiment of the present invention.

The polyvinyl acetal film of the present invention has a ten-point average surface roughness Rz of 30 $\mu$m or more on a surface of a film on a side in contact with glass when a laminated glass is formed. In addition, in the polyvinyl acetal film, a ratio between a composite modulus of the highest part in a convex part and a composite modulus of the lowest part in a concave part on the surface of the film, calculated by an SPM nanoindentation measurement, that is, the ratio (composite modulus of the highest part in the convex part) / (composite modulus of the lowest part in the concave part) is 0.90 or less. In the polyvinyl acetal film, a ratio between a hardness of the highest part in the convex part and a hardness of the lowest part in the concave part, that is, the ratio (hardness of the highest part in the convex part/hardness of the lowest part in the concave part) is preferably 0.90 or less.

The composite modulus and the hardness of the concave part and the convex part on the surface of the film are measured using an SPM. In an SPM measurement of the polyvinyl acetal film of the present invention, by press-fitting a fine probe onto a surface of a sample to a predetermined press-fitting depth by a nanoindentation method, it is possible to detect a load and a displacement of a press-fitting depth and to theoretically calculate the composite modulus and the hardness from an obtained load-displacement curve (unloading curve).

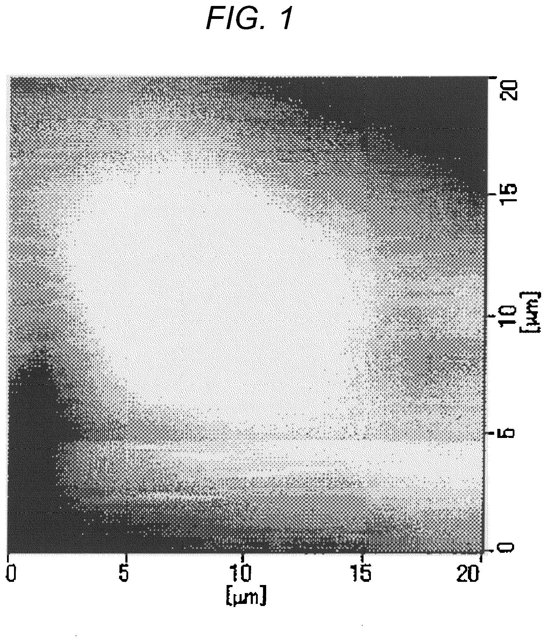

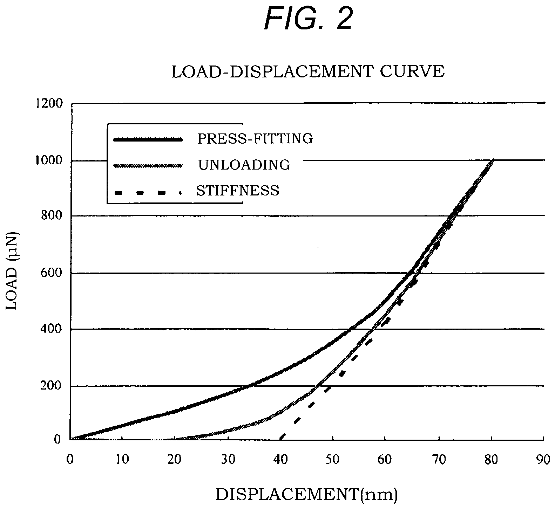

In the SPM nanoindentation method, an imaging image and a load-displacement curve when a probe is press-fitted are obtained. For example, data illustrated in Figs. 1 and 2 is obtained. Before a probe is press-fitted after the surface of the film is imaged using an SPM, the highest part in a convex part and the lowest part in a concave part are specified visually, and the composite modulus and the hardness are calculated based on a load-displacement curve at each point. An indentation image of the surface of the film the composite modulus and the hardness of which have been actually measured after the probe is press-fitted is obtained as an image using an imaging function of an SPM as in Fig. 1. By observing a remaining depth and a contact depth at that time from a load of the probe and a contact area in this measurement, load-displacement curves during press-fitting and unloading are shown as in Fig. 2. The load-displacement curve (press-fitting) indicates a load applied to the probe until the probe is inserted at each displacement. The load-displacement curve (unloading) indicates a load at each displacement until the load applied to the probe becomes zero after the insertion of the probe is finished. In general, various values determined by the SPM nanoindentation method, such as the composite modulus and the hardness, are determined based on the analysis methods described in W. C. Oliver and G. M. Pharr: J. Mater. Res. 7, 1564 (1992).

In this measurement, a composite modulus Er can be calculated from a stiffness S and a contact projection area Ac using formula (1).

[Formula 1]

$$Er = S \frac{\sqrt{\pi}}{2\sqrt{Ac}} \quad (1)$$

The stiffness S can be calculated from an inclination of the unloading curve in the load-displacement curve. The inclination of the unloading curve indicates an inclination of the unloading curve at the time of a high displacement, that is, an inclination of the unloading curve immediately after unloading is started after the probe is press-fitted. The contact projection area Ac is determined from a contact depth (difference between a predetermined press-fitting depth and a surface displacement on a surface around a contact point determined from an inclination of the unloading curve at a maximum load), a constant specific to a geometric shape of the probe, and a correction term using a predetermined formula.

In this measurement, a hardness H can be calculated from a maximum load Wmax and the contact projection area Ac using formula (2).

[Formula 2]

$$H = Wmax/Ac \quad (2)$$

The maximum load Wmax indicates a load when the probe is press-fitted to a predetermined press-fitting depth.

Measurement conditions of the SPM nanoindentation method can be set appropriately. For example, the SPM nanoindentation method can be performed at an insertion pressure of 50 $\mu$N and an upper limit of the press-fitting depth of 200 nm.

In the measurement by the SPM nanoindentation method, the polyvinyl acetal film of the present invention satisfies the composite modulus and the hardness in the concave part $\geqq$ the composite modulus and the hardness in the convex part all the time. Therefore, the ratio (composite modulus of the highest part in the convex part) / (composite modulus of the lowest part in the concave part) or the ratio (hardness of the highest part in the convex part/hardness of the lowest part in the concave part) is 1.00 or less all the time. Here, a smaller ratio (composite modulus of the highest part in the convex part) / (composite modulus of the lowest part in the concave part) or (hardness of the highest part in the convex part) / (hardness of the lowest part in the concave part) indicates a larger difference in the composite modulus or hardness between the convex part and the concave part. On the contrary, a ratio (composite modulus of the highest part in the convex part) / (composite modulus of the lowest part in the concave part) or (hardness of the highest part in the convex part) / (hardness of the lowest part in the concave part) closer to 1.00 indicates no difference in the composite modulus or hardness between the convex part and the concave part.

In the polyvinyl acetal film of the present invention, a ratio of the composite modulus between the highest part in the convex part and the lowest part in the concave part on the surface of the film, measured by the SPM nanoindentation method, that is, the ratio (composite modulus of the highest part in the convex part) / (composite modulus of the lowest part in the concave part) is 0.90 or less, and preferably 0.70 or less. The ratio (composite modulus of the highest part in the convex part) / (composite modulus of the lowest part in the concave part) is more preferably 0.40 or more. By using a film within these ranges as an interlayer film for laminated glass, it is possible to obtain a laminated glass which has excellent transparency and hardly causes a thermal cracking phenomenon.

A ratio of a hardness between the highest part in the convex part and the lowest part in the concave part on the surface of the film, that is, the ratio (hardness of the highest part in the convex part) / (hardness of the lowest part in the concave part) is preferably 0.90 or less, and more preferably 0.70 or less. The ratio (hardness of the highest part in the convex part) / (hardness of the lowest part in the concave part) is still more preferably 0.50 or more. By using a polyvinyl acetal film within these ranges as an interlayer film for laminated glass, it is possible to obtain a laminated glass which has excellent transparency and hardly causes a thermal cracking phenomenon.

When the ratio of the composite modulus between the highest part in the convex part and the lowest part in the concave part on the surface of the film, measured by the SPM nanoindentation method, is more than 0.90, a difference in the composite modulus between the concave part and the convex part is small. Therefore, air generated between glass and the film is not released sufficiently, or an emboss shape is transferred as it is. It is necessary to improve the emboss shape or to control the temperature or humidity strictly. When the ratio of the hardness between the highest part in the convex part and the lowest part in the concave part on the surface of the film, measured by the SPM nanoindentation method, is more than 0.90, a difference in the hardness between the concave part and the convex part is small. Therefore, air generated between glass and the film is not released sufficiently, or the emboss shape is transferred as it is. It is necessary to improve the emboss shape or to control the temperature or humidity strictly.

The surface roughness of the polyvinyl acetal film can be determined by a ten-point average surface roughness Rz obtained from a laser microscope. The ten-point average surface roughness Rz is obtained by extracting a standard length in a direction of an average line of a roughness curve from the roughness curve and determining the sum of an average value of absolute values of heights of the highest peak to the fifth-highest peak, measured in a direction of a longitudinal magnification from the average line of this extracted part, and an average value of absolute values of heights of the lowest bottom to the fifth-lowest bottom. The ten-point average surface roughness Rz is represented in terms of micrometer ($\mu$m) and is in accordance with JIS B0601 (1994).

In the surface roughness of the polyvinyl acetal film of the present invention, the Rz value is 30 $\mu$m or more,

preferably from 50 to 70 $\mu$m, and more preferably from 60 to 69 $\mu$m. The reason is as follows. That is, in a case of an Rz value less than 30 $\mu$m, air generated between glass and the film is not necessarily released sufficiently, and in a case of an Rz value more than 70 $\mu$m, an emboss shape may be transferred as it is.

The transparency of the laminated glass of the present invention can be evaluated by measuring a haze value with a haze meter. A single beam optical measurement type apparatus in accordance with JIS K 7105 is used. Measurement light is D65 light, and a value obtained when a haze value 0.6% is used as a standard calibration plate is used as a standard value. The haze value is determined by a diffuse transmittance and a total light transmittance. A value calculated by (diffuse transmittance) / (total light transmittance) $\times$ 100 is used as the haze value. The haze is preferably 1.0% or less, and most preferably 0.3% or less.

Glass adhesion of the polyvinyl acetal film of the present invention can be evaluated by measuring 90° peel adhesion (N/20 mm) by an autograph 48 hours after the polyvinyl acetal film is pressure-bonded to glass. Measurement conditions of the 90° peel adhesion are, for example, a peeling angle of 90°, a tension speed of 300 mm/min, a temperature of 23°C, and a relative humidity of 50%RH. The peel adhesion is preferably 12 (N/20 mm) or more, and more preferably 17 (N/20 mm) or more.

For example, the polyvinyl acetal film of the present invention is obtained by kneading polyvinyl butyral, triethylene glycol-di-2-ethylhexanoate as a plasticizer, and magnesium acetate tetrahydrate using a twin screw extruder, manufacturing a film using an extrusion die, and pressure-molding the film using an embossing roll with an uneven surface.

The polyvinyl acetal film of the present invention may be a monolayer film or a laminated film. A method for manufacturing the polyvinyl acetal film is not particularly limited, but the polyvinyl acetal film can be manufactured by a conventionally known method such as coextrusion molding, multi-layer injection molding, or dry lamination. In addition, in a laminated film, inside die lamination to bring components in layers into contact with each other inside a die, or outside die lamination to bring the components into contact with each other outside the die may be performed. The extrusion temperature is appropriately selected, but is preferably from 150 to 300°C, and more preferably from 180 to 250°C.

The thickness of the polyvinyl acetal film of the present invention is not particularly limited, but is preferably from 0.1 mm to 2 mm, and more preferably from 0.15 to 1 mm. In order to make the ratio of the composite modulus between the concave part and the convex part 0.90 or less, it is necessary to reduce a bank size by increasing a peripheral speed ratio (by making the peripheral speed ratio closer to 1) as the film is thinner. When a laminated film is formed, an outer layer preferably has a thickness of 0.05 mm or more from a viewpoint of unevenness of a surface.

The polyvinyl acetal film of the present invention is required to have minute unevenness on the outermost surface of at least one surface. The shape of unevenness is not particularly limited. However, considering a handling property (defoaming property) when the film is bonded to glass, an uneven structure is preferably formed on a surface of the film by a conventionally known method such as melt fracture or embossing.

A method for manufacturing a polyvinyl acetal film having a difference in a composite modulus or a hardness between a concave part and a convex part on a surface of a film is not particularly limited, but is preferably a bank molding method. In the bank molding method, an embossed roll is used for a nip roll at a die outlet, an appropriate amount of a resin is allowed to stay between the rolls, and the resin is fed out little by little as a film from between the rolls.

As conditions for molding a film having a difference between the convex part and the concave part on a surface in the bank molding, for example, by setting the resin temperature to 150 to 300°C, setting the roll temperature to 20 to 60°C, and controlling a difference in a peripheral speed between a first roll and a second roll within a peripheral speed ratio (= first roll/second roll) of 0.5 to 0.9 when the nip roll at the die outlet is referred to as the first roll and the second roll from the die side, the bank size becomes from 1 to 10 mm. A film having a difference in a composite modulus and a hardness between the convex part and the concave part on the surface is obtained. The resin temperature is preferably from 180 to 250°C, and more preferably from 190 to 220°C. When the resin temperature is lower than 150°C, an extrusion ejection amount is insufficient, and productivity tends to be poor. When the resin temperature is higher than 300°C, a material is deteriorated easily. The roll temperature is preferably from 25 to 50°C, and more preferably from 35 to 45°C. When the roll temperature is lower than 20°C, anisotropy occurs easily by orientation of a film. When the roll temperature is higher than 60°C, the film is stuck to the roll, and therefore winding tends to be difficult. The peripheral speed ratio between the first roll and the second roll is preferably from 0.5 to 0.8, and more preferably from 0.55 to 0.75. When the peripheral speed ratio between the first roll and the second roll is less than 0.5, too much resin stays, the shape of the film is not stable, and wrinkles and unevenness are caused. When the peripheral speed ratio is more than 0.9, no resin stays and this cannot be referred to as bank molding.

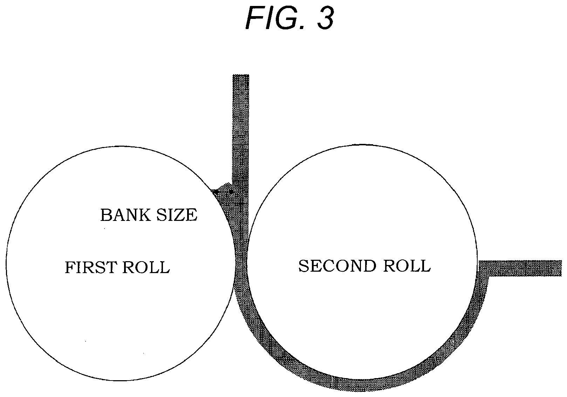

The bank size of the polyvinyl acetal film of the present invention is preferably from 1 to 10 mm, more preferably from 1 to 8 mm, and still more preferably from 1 to 2 mm. As illustrated in Fig. 3, the bank size indicates a size of a resin reservoir (bank) generated upstream in a gap between the first roll and the second roll, and indicates a maximum distance from a surface of a film to a periphery of the bank.

In addition to bank molding, examples of the method for manufacturing a film having a difference in a composite modulus or a hardness between a concave part and a convex part on a surface of a film include a method using rolls having different hardnesses between the convex part and the concave part when embossing is performed using the rolls in film molding. In this case, by using a hard material for the convex part of the roll and using a softer material than the convex part for the concave part, it is possible to make the composite modulus and the hardness of the concave part of the film higher than those of the convex part.

Next, a polyvinyl acetal used in the present invention will be explained. An average amount of hydroxy groups in the polyvinyl acetal used in the present invention is not particularly limited, but is preferably from 20 to 40 mol%, more preferably from 23 to 38 mol%, still more preferably from 25 to 36 mol%, and most preferably from 26 to 29 mol%. When the average amount of hydroxy groups in the polyvinyl acetal is less than 20 mol%, mechanical strength or adhesion to glass may be lowered. When the average amount of hydroxy groups is more than 40 mol%, compatibility with a plasticizer tends to be lowered significantly.

The degree of acetalization of the polyvinyl acetal is not particularly limited, but is preferably from 50 to 78 mol%, more preferably from 60 to 74 mol%, and still more preferably from 65 to 73 mol%. When the degree of acetalization of the polyvinyl acetal is less than 50 mol%, compatibility with a plasticizer may be lowered significantly. When the degree of acetalization of the polyvinyl acetal is more than 74 mol%, mechanical strength of a film tends to be lowered.

An amount of vinyl ester residues in the polyvinyl acetal is not particularly limited, but is preferably from 0.01 to 15 mol%, more preferably from 0.01 to 10 mol%, and still more preferably from 0.01 to 5 mol%. When the amount of vinyl ester residues is less than 0.01 mol%, it is difficult to manufacture the polyvinyl acetal industrially inexpensively. When the amount of vinyl ester residues is more than 15 mol%, a vinyl ester residue is hydrolyzed after use of a film for a long time, and the film tends to be easily colored due to carboxylic acid generated.

The polyvinyl acetal used in the present invention is manufactured using a polyvinyl alcohol as a raw material. The polyvinyl alcohol can be obtained by a conventionally known method, that is, by polymerizing a vinyl ester compound and saponifying the obtained polymer. As a method for polymerizing a vinyl ester compound, it is possible to use a conventionally known method such as a solution polymerization method, a bulk polymerization method, a suspension polymerization method, or an emulsion polymerization method. As a polymerization initiator used for polymerization, an azo initiator, a peroxide initiator, a redox initiator, or the like can be selected appropriately. An alcoholysis or a hydrolysis using a conventionally known alkali catalyst or acid catalyst is applicable to the saponification reaction. Particularly, a saponification reaction using methanol as a solvent and using a caustic soda (NaOH) catalyst is simple and most preferable.

Examples of the vinyl ester compound include a conventionally known vinyl carboxylate such as vinyl formate, vinyl acetate, vinyl propionate, vinyl butyrate, vinyl stearate, or vinyl benzoate. Particularly, vinyl acetate is preferable.

When a vinyl ester compound is polymerized, the vinyl ester compound can be copolymerized with another monomer unless contrary to the gist of the present invention. Examples of the other monomer include an $\alpha$-olefin such as ethylene, propylene, n-butene, or isobutylene; an acrylate such as methyl acrylate, ethyl acrylate, n-propyl acrylate, i-propyl acrylate, n-butyl acrylate, i-butyl acrylate, t-butyl acrylate, 2-ethylhexyl acrylate, dodecyl acrylate, or octadecyl acrylate; a methacrylate such as methyl methacrylate, ethyl methacrylate, n-propyl methacrylate, i-propyl methacrylate, n-butyl methacrylate, i-butyl methacrylate, t-butyl methacrylate, 2-ethylhexyl methacrylate, dodecyl methacrylate, or octadecyl methacrylate; an acrylamide derivative such as acrylamide, N-methyl acrylamide, N-ethyl acrylamide, N,N-dimethylacrylamide, diacetone acrylamide, acrylamide propanesulfonic acid and a salt thereof, acrylamide propyl dimethylamine, a salt thereof, and a quaternary salt thereof, or N-methylol acrylamide and a derivative thereof; a methacrylamide derivative such as methacrylamide, N-methyl methacrylamide, N-ethyl methacrylamide, methacrylamide propanesulfonic acid and a salt thereof, methacrylamide propyl dimethylamine, a salt thereof, and a quaternary salt thereof, or N-methylol methacrylamide and a derivative thereof; a vinyl ether such as methyl vinyl ether, ethyl vinyl ether, n-propyl vinyl ether, i-propyl vinyl ether, n-butyl vinyl ether, i-butyl vinyl ether, t-butyl vinyl ether, dodecyl vinyl ether, or stearyl vinyl ether; a nitrile such as acrylonitrile or methacrylonitrile; a vinyl halide such as vinyl chloride or vinyl fluoride; a vinylidene halide such as vinylidene chloride or vinylidene fluoride; an allyl compound such as allyl acetate or allyl chloride; a vinyl silyl compound such as a maleate, maleic anhydride, or vinyltrimethoxysilane; and isopropenyl acetate. However, the monomer is not limited thereto. These monomers are usually used in amount of less than 10 mol% with respect to a vinyl ester compound.

The viscosity average polymerization degree of a polyvinyl alcohol as a raw material of the polyvinyl acetal used in the present invention is not particularly limited, but is appropriately selected in accordance with use thereof. The viscosity average polymerization degree of a polyvinyl alcohol is preferably from 150 to 3000, more preferably from 200 to 2500, and still more preferably from 1000 to 2500. When the viscosity average polymerization degree of the polyvinyl alcohol is less than 150, strength tends to be insufficient when a film is formed. When the viscosity average polymerization degree of the polyvinyl alcohol is larger than 3000, a handling property of an obtained resin tends to be poor.

The polyvinyl acetal used in the present invention can be obtained, for example, by the following method. However, the method is not limited thereto. First, the temperature of a polyvinyl alcohol aqueous solution having a concentration of 3 to 30% by mass is adjusted to a temperature range of 80 to 100°C. The temperature is gradually lowered over 10 to 60 minutes. When the temperature of the aqueous solution is lowered to -10 to 30°C, an aldehyde and an acid catalyst are added. While the temperature is maintained constant, an acetalization reaction is performed for 30 to 300 minutes. Thereafter, the temperature of the reaction solution is raised to 30 to 80°C over 30 to 200 minutes, and the temperature is maintained for one to six hours. Subsequently, preferably after the temperature of the reaction solution is lowered to room temperature, a neutralizing agent such as an alkali is added as necessary to neutralize the reaction solution. Washing with water and drying are performed to obtain the polyvinyl acetal used in the present invention.

The acid catalyst used for the acetalization reaction is not particularly limited. Either an organic acid or an inorganic acid can be used. Examples thereof include acetic acid, p-toluenesulfonic acid, nitric acid, sulfuric acid, and hydrochloric acid. Among these acid catalysts, hydrochloric acid, sulfuric acid, and nitric acid are preferably used due to causing a stable acetalization reaction.

The aldehyde used for the acetalization reaction of the present invention is not particularly limited. However, it is preferable to use a polyvinyl acetal which has been acetalized with an aldehyde having 1 to 8 carbon atoms. Examples of the aldehyde having 1 to 8 carbon atoms include formaldehyde, acetaldehyde, propionaldehyde, n-butyraldehyde, isobutyraldehyde, n-hexylaldehyde, 2-ethyl butyraldehyde, n-octylaldehyde, 2-ethylhexyl aldehyde, and benzaldehyde. These aldehydes may be each used alone or may be used in combination of two or more kinds thereof. Among these aldehydes, an aldehyde having 4 to 6 carbon atoms, particularly n-butyraldehyde is preferably used in terms of transparency and adhesion to glass. That is, polyvinyl butyral is particularly preferable as a polyvinyl acetal.

The polyvinyl acetal film of the present invention may include an antioxidant, an ultraviolet absorber, a plasticizer, an adhesion improver, and other additives unless contrary to the gist of the present invention.

When an antioxidant is added to the polyvinyl acetal film of the present invention, the kind thereof is not particularly limited. Examples thereof include a phenolic antioxidant, a phosphorus antioxidant, and a sulfur antioxidant. Among these antioxidants, the phenolic antioxidant is preferable, and an alkyl-substituted phenolic antioxidant is particularly preferable.

Examples of the phenolic antioxidant include an alkyl-substituted phenol compound such as 2,6-di-t-butyl-4-methylphenol, 2,6-di-t-butyl-4-ethylphenol, octadecyl-3-(3,5-di-t-butyl-4-hydroxyphenyl)propionate, 2,2'-methylene-bis(4-methyl-6-t-butylphenol), 4,4'-butylidene-bis(4-methyl-6-t-butylphenol), 4,4'-butylidene-bis(6-t-butyl-m-cresol), 4,4'-thiobis(3-methyl-6-t-butylphenol), bis(3-cyclohexyl-2-hydroxy-5-methylphenyl)methane, 3,9-bis(2-(3-(3-t-butyl-4-hydroxy-5-methylphenyl)propionyloxy)-1,1-dim ethylethyl)-2,4,8,10-tetraoxaspiro[5.5]undecane, 1,1,3-tris(2-methyl-4-hydroxy-5-t-butylphenyl)butane, 1,3,5-trimethyl-2,4,6-tris(3,5-di-t-butyl-4-hydroxybenzyl) benzene, tetrakis(methylene-3-(3',5'-di-t-butyl-4'-hydroxyphenyl)propionate)meth ane, or triethylene glycol bis(3-(3-t-butyl-4-hydroxy-5-methylphenyl)propionate); and a triazine group-containing phenol compound such as 6-(4-hydroxy-3,5-di-t-butylanilino)-2,4-bis-octylthio-1,3,5-triazine, 6-(4-hydroxy-3,5-dimethylanilino)-2,4-bis-octylthio-1,3,5-triazine, 6-(4-hydroxy-3-methyl-5-t-butylanilino)-2,4-bis-octylthio-1,3,5- triazine, or 2-octylthio-4,6-bis-(3,5-di-t-butyl-4-oxyanilino)-1,3,5-triazine.

Examples of the phosphorus antioxidant include a mono phosphite compound such as triphenyl phosphite, diphenyl isodecyl phosphite, phenyl diisodecyl phosphite, tris(nonylphenyl)phosphite, tris(di-nonylphenyl)phosphite, tris(2-t-butyl-4-methylphenyl)phosphite, tris(cyclohexylphenyl)phosphite, 2,2-methylenebis(4,6-di-t-butylphenyl)octyl phosphite, 9,10-dihydro-9-oxa-10-phosphaphenanthrene-10-oxide, 10-(3,5-di-t-butyl-4-hydroxybenzyl)-9,10-dihydro-9-oxa-10-phosphaphe nanthrene-10-oxide, or 10-decyloxy-9,10-dihydro-9-oxa-10-phosphaphenanthrene; a diphosphite compound such as 4,4'-butylidene-bis(3-methyl-6-t-butylphenyl-ditridecylphosphite), 4,4'-isopropylidene-bis(phenyl-dialkyl (C12 to C15) phosphite), 4,4'-isopropylidene-bis(diphenyl monoalkyl (C12 to C15) phosphite), 1,1,3-tris(2-methyl-4-ditridecylphosphite-5-t-butylphenyl)butane, or tetrakis (2,4-di-t-butylphenyl)-4,4'-biphenylene phosphite. Among these phosphorus antioxidants, a mono phosphite compound is preferable.

Examples of the sulfur antioxidant include dilauryl 3,3'-thiodipropionate, distearyl 3,3'-thiodipropionate, lauryl stearyl 3,3'-thiodipropionate, pentaerythritol-tetrakis-($\beta$-lauryl-thiopropionate), and 3,9-bis(2-dodecyl thioethyl)-2,4,8,10-tetraoxaspiro[5.5]undecane.

These antioxidants can be each used alone or can be used in combination of two or more kinds thereof. An addition amount the antioxidant is preferably from 0.001 to 5% by mass, and more preferably from 0.01 to 1% by mass, with respect to the mass of the film. When the addition amount of the antioxidant is smaller than 0.001% by mass with respect to the mass of the film, a sufficient antioxidant effect is not necessarily obtained. Even when the addition amount of the antioxidant is larger than 5% by mass, a remarkable effect cannot be expected.

When an ultraviolet absorber is added to the polyvinyl acetal film of the present invention, the kind thereof is not particularly limited. Examples of the ultraviolet absorber used include a benzotriazole ultraviolet absorber such as 2-(5-methyl-2-hydroxyphenyl) benzotriazole, 2-[2-hydroxy-3,5-bis($\alpha,\alpha'$-dimethylbenzyl)phenyl]-2H-benzotriazole, 2-(3,5-di-t-butyl-2-hydroxyphenyl) benzotriazole, 2-(3-t-butyl-5-methyl-2-hydroxyphenyl)-5-chlorobenzotriazole, 2-(3,5-di-t-butyl-5-methyl-2-hydroxyphenyl)-5-chlorobenzotriazole, 2-(3,5-di-t-amyl-2-hydroxyphenyl) benzotriazole, or 2-(2'-hydroxy-5'-t-octylphenyl) benzotriazole; a hindered amine ultraviolet absorber such as 2,2,6,6-tetramethyl-4-piperidyl benzoate, bis(2,2,6,6-tetramethyl-4-piperidyl) sebacate, bis(1,2,2,6,6-pentamethyl-4-piperidyl)-2-(3,5-di-t-butyl-4-hydroxybenzyl )-2-n-butylmalonate, or 4-(3-(3,5-di-t-butyl-4-hydroxyphenyl) propionyloxy)-1-(2-(3-(3,5-di-t-butyl-4-hydroxyphenyl) propionyloxy) ethyl)-2,2,6,6-tetramethylpiperidine; and a benzoate ultraviolet absorber such as 2,4-di-t-butylphenyl-3,5-di-t-butyl-4-hydroxybenzoate or hexadecyl-3,5-di-t-butyl-4-hydroxy benzoate.

An addition amount of these ultraviolet absorbers is preferably from 0.001 to 5% by mass, and more preferably from 0.01 to 1% by mass, with respect to the mass of the film. When the addition amount of the ultraviolet absorber is smaller than 0.001% by mass, a sufficient ultraviolet-absorbing effect is not necessarily obtained. Even when the addition amount of the ultraviolet absorber is larger than 5% by mass, a remarkable effect cannot be expected. These ultraviolet absorbers can be each used alone or can be used in combination of two or more kinds thereof.

Examples of the plasticizer added to the polyvinyl acetal film of the present invention include a carboxylate plasticizer such as a monovalent carboxylate or a polyvalent carboxylate, a phosphate plasticizer, an organic phosphite plasticizer, a hydroxycarboxylate plasticizer, and a polymer plasticizer such as a polyester, a polycarbonate ester, or a polyether.

Examples of the monovalent carboxylate plasticizer include a compound obtained by a condensation reaction between a monovalent carboxylic acid such as butanoic acid, isobutanoic acid, hexanoic acid, 2-ethylhexanoic acid, heptanoic acid, octylic acid, 2-ethylhexanoic acid, or lauric acid, and a polyhydric alcohol such as ethylene glycol, diethylene glycol, triethylene glycol, tetraethylene glycol, polyethylene glycol, or glycerin. Specific examples thereof include triethylene glycol-di-2-ethylhexanoate, triethylene glycol diisobutanoate, triethylene glycol-di-2-hexanoate, triethylene glycol-di-2-ethylbutanoate, triethylene glycol dilaurate, ethylene glycol-di-2-ethylhexanoate, diethylene glycol-di-2-ethylhexanoate, tetraethylene glycol-di-2-ethylhexanoate, tetraethylene glycol diheptanoate, PEG # 400-di-2-ethylhexanoate, triethylene glycol mono-2-ethylhexanoate, and glycerin tri-2-ethylhexanoate. Here, the PEG # 400 represents a polyethylene glycol having an average molecular weight of 350 to 450.

Examples of the polyvalent carboxylate plasticizer include a compound obtained by a condensation reaction between a polyvalent carboxylic acid such as adipic acid, succinic acid, azelaic acid, sebacic acid, phthalic acid, isophthalic acid, terephthalic acid, or trimellitic acid, and a monohydric alcohol having 1 to 12 carbon atoms, such as methanol, ethanol, butanol, hexanol, 2-ethyl butanol, heptanol, octanol, 2-ethylhexanol, decanol, dodecanol, butoxyethanol, butoxyethoxy ethanol, or benzyl alcohol. Specific examples thereof include dihexyl adipate, di-2-ethylhexyl adipate, diheptyl adipate, dioctyl adipate, di-2-ethylhexyl adipate, di(butoxyethyl) adipate, di(butoxyethoxyethyl) adipate, mono(2-ethylhexyl) adipate, dibutyl phthalate, dihexyl phthalate, di(2-ethylbutyl) phthalate, dioctyl phthalate, di(2-ethylhexyl) phthalate, benzylbutyl phthalate, and didodecyl phthalate. However, the polyvalent carboxylate plasticizer is not limited thereto.

Examples of the phosphoric acid plasticizer or the phosphorous acid plasticizer include a compound obtained by a condensation reaction between phosphoric acid or phosphorous acid and an alcohol having 1 to 12 carbon atoms, such as methanol, ethanol, butanol, hexanol, 2-ethyl butanol, heptanol, octanol, 2-ethylhexanol, decanol, dodecanol, butoxyethanol, butoxyethoxy ethanol, or benzyl alcohol. Specific examples thereof include trimethyl phosphate, triethyl phosphate, tripropyl phosphate, tributyl phosphate, tri(2-ethylhexyl) phosphate, tri(butoxyethyl) phosphate, and tri(2-ethylhexyl) phosphite.

Examples of the hydroxycarboxylate plasticizer include an ester formed of a hydroxycarboxylic acid and a monohydric alcohol, such as methyl ricinoleate, ethyl ricinoleate, butyl ricinoleate, methyl 6-hydroxyhexanoate, ethyl 6-hydroxyhexanoate, or butyl 6-hydroxyhexanoate; and an ester formed of a hydroxycarboxylic acid and a polyhydric alcohol, such as ethylene glycol-di-6-hydroxyhexanoate, diethylene glycol-di-6-hydroxyhexanoate, triethylene glycol-di-6-hydroxyhexanoate, 3-methyl-1,5-pentanediol-di-6-hydroxyhexanoate, 3-methyl-1,5-pentanediol-di-2-hydroxybutyrate, 3-methyl-1,5-pentanediol-di-3-hydroxybutyrate, 3-methyl-1,5-pentanediol-di-4-hydroxybutyrate, triethylene glycol-di-2-hydroxybutyrate, glycerin-tri-ricinoleate, di(1-(2-ethylhexyl)) L-tartrate, or castor oil.

Examples of the polyester plasticizer include a carboxylic acid polyester obtained by alternating copolymerization between a polyvalent carboxylic acid and a polyhydric alcohol, and a carboxylic acid polyester obtained by ring-opening polymerization of a lactone compound such as ε-caprolactone. Examples of the polyvalent carboxylic acid include oxalic acid, malonic acid, succinic acid, adipic acid, suberic acid, sebacic acid, dodecanedioic acid, 1,2-cyclohexanedicarboxylic acid, 1,3-cyclohexanedicarboxylic acid, and 1,4-cyclohexanedicarboxylic acid. Examples of the polyhydric alcohol include ethylene glycol, diethylene glycol, triethylene glycol, tetraethylene glycol, 1,2-propylene glycol, 1,3-propylene glycol, 1,2-butylene glycol, 1,3-butylene glycol, 1,4-butylene glycol, 1,2-pentanediol, 1,5-pentanediol, 2,4-pentanediol, 1,2-hexanediol, 1,6-hexanediol, 3-methyl-1,5-pentanediol, 3-methyl-2,4-pentanediol, 1,2-heptanediol, 1,7-heptanediol, 1,2-octanediol, 1,8-octanediol, 1,2-nonanediol, 1,9-nonanediol, 2-methyl-1,8-octanediol, 1,2-decanediol, 1,10-decanediol, 1,2-dodecanediol, 1,12-dodecanediol, 1,2-cyclohexanediol, 1,3-cyclohexanediol, 1,4-cyclohexanediol, 1,2-bis(hydroxymethyl) cyclohexane, 1,3-bis(hydroxymethyl) cyclohexane, and 1,4-bis(hydroxymethyl) cyclohexane. Terminal structures of these polyesters are not particularly limited, but may be a hydroxy group, a carboxyl group, or a structure obtained by reacting a terminal hydroxy group or a terminal carboxyl group with a monovalent carboxylic acid or a monohydric alcohol.

Examples of the polycarbonate ester plasticizer include a polycarbonate ester compound obtained by alternating copolymerization between a polyhydric alcohol and a carbonate ester by a transesterification reaction. Examples of the polyhydric alcohol include ethylene glycol, diethylene glycol, triethylene glycol, tetraethylene glycol, 1,2-propylene glycol, 1,3-propylene glycol, 1,2-butylene glycol, 1,3-butylene glycol, 1,4-butylene glycol, 1,2-pentanediol, 1,5-pentanediol, 2,4-pentanediol, 1,2-hexanediol, 1,6-hexanediol, 3-methyl-1,5-pentanediol, 3-methyl-2,4-pentanediol, 1,2-heptanediol, 1,7-heptanediol, 1,2-octanediol, 1,8-octanediol, 1,2-nonanediol, 1,9-nonanediol, 2-methyl-1,8-octanediol, 1,2-decanediol, 1,10-decanediol, 1,2-dodecanediol, 1,12-dodecanediol, 1,2-cyclohexanediol, 1,3-cyclohexanediol, 1,4-cyclohexanediol, 1,2-bis(hydroxymethyl) cyclohexane, 1,3-bis(hydroxymethyl) cyclohexane, and 1,4-bis(hydroxymethyl) cyclohexane. Examples of the carbonate include dimethyl carbonate and diethyl carbonate. Terminal structures of these polycarbonate ester compounds are not particularly limited, but is preferably a carbonate ester group, a hydroxy group, or the like.

Examples of the polyether plasticizer include polyethylene glycol, poly(1,2-propylene glycol), poly(1,3-propylene glycol), poly(1,2-butylene glycol), poly(1,3-butylene glycol), poly(1,4-butylene glycol), poly(2,3-butylene glycol), and a random copolymer of two or more kinds of compounds selected from ethylene glycol, 1,2-propylene glycol, 1,3-propylene glycol, 1,2-butylene glycol, 1,3-butylene glycol, 1,4-butylene glycol, and 2,3- butylene glycol and a block copolymer thereof.

When a plasticizer is used in the present invention, the plasticizer may be used alone or may be used in combination of two or more kinds thereof. An addition amount of a plasticizer is not particularly limited, but is preferably from 1 to 100 parts by mass, more preferably from 5 to 70 parts by mass, and still more preferably from 20 to 60 parts by mass, with respect to 100 parts by mass of the polyvinyl acetal contained in the polyvinyl acetal film. When the use amount of a plasticizer with respect to 100 parts by mass of the polyvinyl acetal contained in the polyvinyl acetal film is smaller than 1 part by mass, a sufficient plasticizing effect is not necessarily obtained. Even when the use amount of the plasticizer is larger than 100 parts by mass, a remarkable plasticizing effect cannot be obtained.

The polyvinyl acetal film of the present invention is suitably used for an interlayer film for laminated glass. Hereinafter, a case in which the film of the present invention is used for an interlayer film for laminated glass will be described. When the film of the present invention is used as an interlayer film for laminated glass, glass to be used is not particularly limited. Examples thereof include inorganic glass such as float plate glass, polished plate glass, template glass, wired plate glass, or heat-absorbing plate glass, and conventionally known organic glass such as polymethyl methacrylate or polycarbonate. These glass may be colorless, colored, transparent, or non-transparent. These glass may be each used alone or may be used in combination of two or more kinds thereof. The thickness of glass is not particularly limited, but is preferably 100 mm or less, and more preferably 10 mm or less in terms of practical use as a laminated glass for a building or an automobile.

Furthermore, by use of the polyvinyl acetal film of the present invention as a filler of a solar cell module, the polyvinyl acetal film is suitably used in a field requiring sound insulation, particularly for a building-integrated solar cell such as BIPV.

The laminated glass of the present invention can be manufactured by a conventionally known method. Examples thereof include a method using a vacuum laminator, a method using a vacuum bag, a method using a vacuum ring, and a method using a nip roll. It is possible to additionally perform a method of putting the laminated glass into an autoclaving step after the laminated glass is temporarily pressure-bonded.

When a vacuum laminator is used, for example, laminating is performed using a known apparatus used for manufacturing a solar cell, at a reduced pressure of $1 \times 10^{-6}$ to $3 \times 10^{-2}$ MPa, at a temperature of 100 to 200°C, particularly of 130 to 160°C. A method of using a vacuum bag or a vacuum ring is described, for example, in EP 1235683 B. Laminating is performed, for example, at a pressure of about $2 \times 10^{-2}$ MPa, at 130 to 145°C.

When a nip roll is used, for example, first temporary pressure-bonding is performed at a flow starting temperature of a plasticized polyvinyl acetal or lower, and then temporary pressure-bonding is further performed in conditions close to the flow starting temperature. Specifically, for example, heating to 30 to 70°C is performed with an infrared heater or the like, then degassing is performed with a roll, heating to 50 to 120°C is further performed, and then bonding or temporary bonding is performed by pressure-bonding with a roll.

The autoclaving step which may be performed additionally after temporary pressure-bonding depends on the thickness and the structure of a module or laminated glass, but is performed, for example, under a pressure of 0.1 to 0.15 MPa at a temperature of 130 to 145°C for 0.5 to 2 hours.

EXAMPLES

Hereinafter, the present invention will be described in more detail using Examples. However, the present invention is not limited in any way by Examples. In the following Examples, "%" means "% by mass" unless otherwise specified.

As for polyvinyl acetal films obtained in Examples, Reference Examples and Comparative Examples, a ten-point average surface roughness measured with a laser microscope, a composite modulus and a hardness in an SPM nanoindentation measurement, and a haze and glass adhesion when a laminated glass is formed were evaluated by the following methods. Evaluation results are indicated in Table 1.

(Measurement of ten-point average surface roughness Rz)

As for an obtained film, a ten-point average surface roughness Rz obtained from a laser microscope (VK-X200 manufactured by Keyence Corporation) was determined in accordance with JIS B0601 (1994) and JIS B0031 (1994). The ten-point average surface roughness Rz was obtained by extracting a standard length in a direction of an average line of a roughness curve from the roughness curve and determining the sum of an average value of absolute values of heights of the highest peak to the fifth-highest peak, measured in a direction of a longitudinal magnification from the average line of this extracted part, and an average value of absolute values of heights of the lowest bottom to the fifth-lowest bottom. The ten-point average surface roughness Rz was represented in terms of micrometer ($\mu$m).

(Measurement of composite modulus and hardness in SPM nanoindentation measurement)

As for an obtained film, a composite modulus and a hardness were measured using an SPM (multifunctional SPM apparatus manufactured by Hitachi High-Technologies Corporation) by a nanoindentation method. Under measurement conditions of a temperature of 25°C, a relative humidity of 25%RH, an insertion pressure of 50 $\mu$N (insertion for three seconds), and an upper limit of the press-fitting depth of 200 nm, a load and a displacement of the press-fitting depth were detected by press-fitting a fine probe onto a surface of the film. Based on an indentation image obtained after the probe was press-fitted, three highest parts in convex parts and three lowest parts in concave parts were specified visually. The composite modulus and the hardness were theoretically calculated based on a load-displacement curve (unloading curve) at each point by the above-described method, and an average value was determined.

(Measurement of haze)

As for an obtained laminated glass, a haze value was evaluated using a haze meter (XZ-1 manufactured by Suga Test Instruments Co., Ltd.) in accordance with JIS K 7105. In the haze meter, a single beam optical measurement type apparatus was used, measurement light was D65 light, a value obtained when a haze value 0.6% was used as a standard calibration plate was used as a standard value, and a value calculated by (diffuse transmittance) / (total light transmittance) $\times$ 100 was used as the haze value. Evaluation of the haze was indicated by three levels of A to C. A range of 0.3% or less was evaluated as A, a range of 0.4 to 1.0% was evaluated as B, and a range of 1.1% or more was evaluated as C.

(Evaluation of glass adhesion)

Adhesion of an obtained film to glass was evaluated by measuring 90° peel adhesion (N/20 mm) by an autograph 48 hours after the polyvinyl acetal film was pressure-bonded to glass. Measurement conditions of the 90° peel adhesion were a peeling angle of 90°, a tension speed of 300 mm/min, a temperature of 23°C, and a relative humidity of 50%RH. Evaluation of glass adhesion was indicated by three levels of A to C. A range of 17 to 20 N/20 mm was evaluated as A, a range of 12 to 16 N/20 mm was evaluated as B, and a range of 0 to 11 N/20 mm was evaluated as C.

(Example 1)

A 100L SUS container equipped with a reflux condenser, a thermometer, and an anchor type stirring blade was charged with 8100 parts by mass of ion-exchanged water and 660 parts by mass of polyvinyl alcohol (hereinafter, referred to as PVA) (viscosity average polymerization degree: 1700, saponification degree: 99 mol%) (PVA concentration: 7.5%). The temperature of the contents was raised to 95°C, and the contents were completely dissolved. Subsequently, while the contents were stirred at 120 rpm, the temperature thereof was gradually lowered to 5°C. Thereafter, 435 parts by mass of n-butyraldehyde and 540 mL of 20% hydrochloric acid were added thereto, and a butyralization reaction was performed for 150 minutes. Thereafter, the temperature was raised to 50°C over 60 minutes, was maintained at 50°C for 120 minutes, and was then lowered to room temperature. After a precipitated resin was washed with ion-exchanged water, an excessive amount of sodium hydroxide aqueous solution was added thereto. The resin was washed again and dried to obtain polyvinyl butyral (hereinafter, referred to as PVB). The butyralization degree (average acetalization degree) of the obtained PVB was 69 mol%, the content of vinyl acetate groups was 1 mol%, and the content of vinyl alcohol groups was 30 mol%. The butyralization degree of PVB and the content of remaining vinyl acetate groups were measured according to JIS K6728.

Using a twin screw extruder, 100 parts by mass of the PVB obtained above, 38 parts by mass of triethylene glycol-di-2-ethylhexanoate as a plasticizer, and 0.048 parts by mass of magnesium acetate tetrahydrate were kneaded at a resin temperature of 200°C. A film was manufactured by using an embossing roll having Rz of 70 $\mu$m for each of the first roll and the second roll, setting the roll temperature to 30°C, and setting the peripheral speed ratio between the first roll and the second roll to 0.75, when extrusion molding was performed using a die. At this time, the bank size was adjusted to 2 mm to obtain a polyvinyl acetal film having a film thickness of 760 $\mu$m. As for this film, Rz and the composite modulus and the hardness in the SPM nanoindentation measurement were measured.

A laminated glass was obtained using this film as an interlayer film for laminated glass. The laminated glass was laminated at a reduced pressure of $2 \times 10^{-2}$ MPa at 140°C using a vacuum laminator, was temporarily pressure-bonded, and then was subjected to an autoclaving treatment at a pressure of 0.1 MPa at a temperature of 140°C for two hours. The haze and glass adhesion of the obtained laminated glass were evaluated. Evaluation results are shown in Table 1.

(Example 2)

Melting extrusion was performed in a similar manner to Example 1 except that the bank size was adjusted to 2 mm when a film was formed by setting the roll temperature to 35°C and setting the peripheral speed ratio between the first roll and the second roll to 0.70. A polyvinyl acetal film having a film thickness of 760 $\mu$m was obtained. A laminated glass was obtained using this film in a similar manner to Example 1. As for the obtained film, Rz, the composite modulus and the hardness in the SPM nanoindentation measurement, and the haze and glass adhesion of the obtained laminated glass are shown in Table 1.

(Example 3)

Melting extrusion was performed in a similar manner to Example 1 except that the bank size was adjusted to 2 mm when a film was formed by setting the roll temperature to 25°C and setting the peripheral speed ratio between the first roll and the second roll to 0.80. A polyvinyl acetal film having a film thickness of 760 $\mu$m was obtained. A laminated glass was obtained using this film in a similar manner to Example 1. As for the obtained film, Rz, the composite modulus and the hardness in the SPM nanoindentation measurement, and the haze and glass adhesion of the obtained laminated glass are shown in Table 1.

(Example 4)

Melting extrusion was performed in a similar manner to Example 1 except that the bank size was adjusted to 2 mm when a film was formed by setting the roll temperature to 40°C and setting the peripheral speed ratio between the first roll and the second roll to 0.65. A polyvinyl acetal film having a film thickness of 760 $\mu$m was obtained. A laminated glass was obtained using this film in a similar manner to Example 1. As for the obtained film, Rz, the composite modulus and the hardness in the SPM nanoindentation measurement, and the haze and glass adhesion of the obtained laminated glass are shown in Table 1.

(Example 5)

Melting extrusion was performed in a similar manner to Example 1 except that the bank size was adjusted to 3 mm when a film was formed by setting the roll temperature to 30°C and setting the peripheral speed ratio between the first roll and the second roll to 0.70. A polyvinyl acetal film having a film thickness of 760 $\mu$m was obtained. A laminated glass was obtained using this film in a similar manner to Example 1. As for the obtained film, Rz, the composite modulus and the hardness in the SPM nanoindentation measurement, and the haze and glass adhesion of the obtained laminated glass are shown in Table 1.

(Example 6)

Melting extrusion was performed in a similar manner to Example 1 except that the bank size was adjusted to 3 mm when a film was formed by setting the roll temperature to 25°C and setting the peripheral speed ratio between the first roll and the second roll to 0.75. A polyvinyl acetal film having a film thickness of 760 $\mu$m was obtained. A laminated glass was obtained using this film in a similar manner to Example 1. As for the obtained film, Rz, the composite modulus and the hardness in the SPM nanoindentation measurement, and the haze and glass adhesion of the obtained laminated glass are shown in Table 1.

(Example 7)

Melting extrusion was performed in a similar manner to Example 1 except that the bank size was adjusted to 3 mm when a film was formed by setting the roll temperature to 40°C and setting the peripheral speed ratio between the first roll and the second roll to 0.60. A film having a film thickness of 760 μm was obtained. A laminated glass was obtained using this film in a similar manner to Example 1. As for the obtained film, Rz, the composite modulus and the hardness in the SPM nanoindentation measurement, and the haze and glass adhesion of the obtained laminated glass are shown in Table 1.

(Example 8)

Melting extrusion was performed in a similar manner to Example 1 except that the bank size was adjusted to 1 mm when a film was formed by setting the roll temperature to 30°C and setting the peripheral speed ratio between the first roll and the second roll to 0.80. A polyvinyl acetal film having a film thickness of 760 μm was obtained. A laminated glass was obtained using this film in a similar manner to Example 1. As for the obtained film, Rz, the composite modulus and the hardness in the SPM nanoindentation measurement, and the haze and glass adhesion of the obtained laminated glass are shown in Table 1.

(Example 9)

Melting extrusion was performed in a similar manner to Example 1 except that the bank size was adjusted to 1 mm when a film was formed by setting the roll temperature to 25°C and setting the peripheral speed ratio between the first roll and the second roll to 0.90. A film having a film thickness of 760 μm was obtained. A laminated glass was obtained using this film in a similar manner to Example 1. As for the obtained film, Rz, the composite modulus and the hardness in the SPM nanoindentation measurement, and the haze and glass adhesion of the obtained laminated glass are shown in Table 1.

(Example 10)

Melting extrusion was performed in a similar manner to Example 1 except that the bank size was adjusted to 1 mm when a film was formed by setting the roll temperature to 40°C and setting the peripheral speed ratio between the first roll and the second roll to 0.70. A polyvinyl acetal film having a film thickness of 760 μm was obtained. A laminated glass was obtained using this film in a similar manner to Example 1. As for the obtained film, Rz, the composite modulus and the hardness in the SPM nanoindentation measurement, and the haze and glass adhesion of the obtained laminated glass are shown in Table 1.

(Example 11)

Melting extrusion was performed in a similar manner to Example 1 except that the bank size was adjusted to 5 mm when a film was formed by setting the roll temperature to 30°C and setting the peripheral speed ratio between the first roll and the second roll to 0.65. A polyvinyl acetal film having a film thickness of 760 μm was obtained. A laminated glass was obtained using this film in a similar manner to Example 1. As for the obtained film, Rz, the composite modulus and the hardness in the SPM nanoindentation measurement, and the haze and glass adhesion of the obtained laminated glass are shown in Table 1.

(Example 12)

Melting extrusion was performed in a similar manner to Example 1 except that the bank size was adjusted to 5 mm when a film was formed by setting the roll temperature to 25°C and setting the peripheral speed ratio between the first roll and the second roll to 0.70. A polyvinyl acetal film having a film thickness of 760 μm was obtained. A laminated glass was obtained using this film in a similar manner to Example 1. As for the obtained film, Rz, the composite modulus and the hardness in the SPM nanoindentation measurement, and the haze and glass adhesion of the obtained laminated glass are shown in Table 1.

(Example 13)

Melting extrusion was performed in a similar manner to Example 1 except that the bank size was adjusted to 5 mm when a film was formed by setting the roll temperature to 40°C and setting the peripheral speed ratio between the first roll and the second roll to 0.55. A polyvinyl acetal film having a film thickness of 760 μm was obtained. A laminated glass was obtained using this film in a similar manner to Example 1. As for the obtained film, Rz, the composite modulus and the hardness in the SPM nanoindentation measurement, and the haze and glass adhesion of the obtained laminated glass are shown in Table 1.

(Reference Example 14)

Melting extrusion was performed in a similar manner to Example 1 except that the bank size was adjusted to 10 mm when a film was formed by setting the roll temperature to 30°C and setting the peripheral speed ratio between the first roll and the second roll to 0.60. A polyvinyl acetal film having a film thickness of 760 $\mu$m was obtained. A laminated glass was obtained using this film in a similar manner to Example 1. As for the obtained film, Rz, the composite modulus and the hardness in the SPM nanoindentation measurement, and the haze and glass adhesion of the obtained laminated glass are shown in Table 1.

(Reference Example 15)

Melting extrusion was performed in a similar manner to Example 1 except that the bank size was adjusted to 10 mm when a film was formed by setting the roll temperature to 25°C and setting the peripheral speed ratio between the first roll and the second roll to 0.65. A polyvinyl acetal film having a film thickness of 760 $\mu$m was obtained. A laminated glass was obtained using this film in a similar manner to Example 1. As for the obtained film, Rz, the composite modulus and the hardness in the SPM nanoindentation measurement, and the haze and glass adhesion of the obtained laminated glass are shown in Table 1.

(Example 16)

Melting extrusion was performed in a similar manner to Example 1 except that the bank size was adjusted to 10 mm when a film was formed by setting the roll temperature to 40°C and setting the peripheral speed ratio between the first roll and the second roll to 0.50. A polyvinyl acetal film having a film thickness of 760 $\mu$m was obtained. A laminated glass was obtained using this film in a similar manner to Example 1. As for the obtained film, Rz, the composite modulus and the hardness in the SPM nanoindentation measurement, and the haze and glass adhesion of the obtained laminated glass are shown in Table 1.

(Example 17)

PVB was synthesized in a similar manner to Example 1 except that 514 parts by mass of n-butyraldehyde was used to obtain a polyvinyl acetal film. The butyralization degree of the obtained PVB was 78 mol%, the content of vinyl acetate groups was 1 mol%, and the content of vinyl alcohol groups was 21 mol%. A laminated glass was obtained using this film in a similar manner to Example 1. As for the obtained film, Rz, the composite modulus and the hardness in the SPM nanoindentation measurement, and the haze and glass adhesion of the obtained laminated glass are shown in Table 1.

(Example 18)

PVB was synthesized in a similar manner to Example 1 except that 340 parts by mass of n-butyraldehyde was used to obtain a polyvinyl acetal film. The butyralization degree of the obtained PVB was 52 mol%, the content of vinyl acetate groups was 1 mol%, and the content of vinyl alcohol groups was 47 mol%. A laminated glass was obtained using this film in a similar manner to Example 1. As for the obtained film, Rz, the composite modulus and the hardness in the SPM nanoindentation measurement, and the haze and glass adhesion of the obtained laminated glass are shown in Table 1.

(Example 19)

Melting extrusion was performed in a similar manner to Example 1 except that the bank size was adjusted to 2 mm when a film was formed by using the PVB used in Example 18, setting the roll temperature to 25°C, and setting the peripheral speed ratio between the first roll and the second roll to 0.80. A polyvinyl acetal film having a film thickness of 760 $\mu$m was obtained. A laminated glass was obtained using this film in a similar manner to Example 1. As for the obtained film, Rz, the composite modulus and the hardness in the SPM nanoindentation measurement, and the haze and glass adhesion of the obtained laminated glass are shown in Table 1.

(Comparative Example 1)

Melting extrusion was performed in a similar manner to Example 1 except that no bank size was provided when a film was formed by setting the roll temperature to 30°C and making the peripheral speed of the first roll the same as that of the second roll, and a clearance between a first cooling roll and a second cooling roll at a die outlet was set to 720 $\mu$m. A polyvinyl acetal film was obtained. A laminated glass was obtained using the obtained film in a similar manner to Example 1. As for the obtained film, Rz, the composite modulus and the hardness in the SPM nanoindentation measurement, and the haze and glass adhesion of the obtained laminated glass are shown in Table 1.

(Comparative Example 2)

Melting extrusion was performed in a similar manner to Example 1 except that no bank size was provided when a film was formed by setting the roll temperature to 40°C and making the peripheral speed of the first roll the same as that of the second roll, and the clearance between the first cooling roll and the second cooling roll at the die outlet was set to 750 $\mu$m. A film was obtained. A laminated glass was obtained using the obtained film in a similar manner to Example 1. As for the obtained film, Rz, the composite modulus and the hardness in the SPM nanoindentation measurement, and the haze and glass adhesion of the obtained laminated glass are shown in Table 1.

(Comparative Example 3)

Melting extrusion was performed in a similar manner to Example 1 except that no bank size was provided when a film was formed by setting the roll temperature to 40°C and making the peripheral speed of the first roll the same as that of the second roll, and the clearance between the first cooling roll and the second cooling roll at the die outlet was set to 720 $\mu$m. A polyvinyl acetal film was obtained. A laminated glass was obtained using the obtained film in a similar manner to Example 1. As for the obtained film, Rz, the composite modulus and the hardness in the SPM nanoindentation measurement, and the haze and glass adhesion of the obtained laminated glass are shown in Table 1.

(Comparative Example 4)

Melting extrusion was performed in a similar manner to Example 1 except that no bank size was provided when a film was formed by setting the roll temperature to 25°C and making the peripheral speed of the first roll the same as that of the second roll, and the clearance between the first cooling roll and the second cooling roll at the die outlet was set to 720 $\mu$m. A polyvinyl acetal film was obtained. A laminated glass was obtained using the obtained film in a similar manner to Example 1. As for the obtained film, Rz, the composite modulus and the hardness in the SPM nanoindentation measurement, and the haze and glass adhesion of the obtained laminated glass are shown in Table 1.

(Comparative Example 5)

Melting extrusion was performed in a similar manner to Example 1 except that no bank size was provided when a film was formed by setting the roll temperature to 25°C and making the peripheral speed of the first roll the same as that of the second roll, and the clearance between the first cooling roll and the second cooling roll at the die outlet was set to 750 $\mu$m. A film was obtained. A laminated glass was obtained using the obtained film in a similar manner to Example 1. As for the obtained film, Rz, the composite modulus and the hardness in the SPM nanoindentation measurement, and the haze and glass adhesion of the obtained laminated glass are shown in Table 1.

[Table 1]

| Sample name | Laser microscope — Ten-point average surface roughness (Rz) | SPM nanoindentation — Measured part | SPM nanoindentation — Composite modulus (GPa) | SPM nanoindentation — Ratio of convex part/concave part*1 | Measured part | Hardness (GPa) | Ratio of convex part/concave part*2 | Haze mater — Haze (%) | Haze mater — Evaluation | Glass adhesion — Peel adhesion (N/20 mm) | Glass adhesion — Evaluation |
|---|---|---|---|---|---|---|---|---|---|---|---|
| Example 1 | 69.5 | Convex part | 0.30 | 0.88 | Convex part | 0.007 | 0.88 | 0.3 | A | 17 | A |
|  |  | Concave part | 0.34 |  | Concave part | 0.008 |  |  |  |  |  |
| Example 2 | 67.4 | Convex part | 0.29 | 0.67 | Convex part | 0.007 | 0.70 | 0.3 | A | 18 | A |
|  |  | Concave part | 0.43 |  | Concave part | 0.010 |  |  |  |  |  |
| Example 3 | 72.3 | Convex part | 0.33 | 0.35 | Convex part | 0.007 | 0.40 | 0.9 | B | 15 | B |
|  |  | Concave part | 0.94 |  | Concave part | 0.018 |  |  |  |  |  |
| Example 4 | 65 | Convex part | 0.26 | 0.59 | Convex part | 0.007 | 0.64 | 0.2 | A | 19 | A |
|  |  | Concave part | 0.44 |  | Concave part | 0.011 |  |  |  |  |  |
| Example 5 | 61.2 | Convex part | 0.32 | 0.76 | Convex part | 0.007 | 0.88 | 0.4 | B | 17 | A |
|  |  | Concave part | 0.42 |  | Concave part | 0.008 |  |  |  |  |  |
| Example 6 | 80.9 | Convex part | 0.3 | 0.38 | Convex part | 0.007 | 0.41 | 0.8 | B | 13 | B |
|  |  | Concave part | 0.78 |  | Concave part | 0.017 |  |  |  |  |  |

| Sample name | Laser microscope | SPM nanoindentation | | | | | | Haze mater | | Glass adhesion | |
| --- | --- | --- | --- | --- | --- | --- | --- | --- | --- | --- | --- |
| | Ten-point average surface roughness (Rz) | Measured part | Composite modulus (GPa) | Ratio of convex part/ concave part*1 | Measured part | Hardness (GPa) | Ratio of convex part/ concave part*2 | Haze (%) | Evaluation | Peel adhesion (N/20 mm) | Evaluation |
| Example 7 | 52.3 | Convex part | 0.26 | 0.67 | Convex part | 0.007 | 0.64 | 0.3 | A | 17 | A |
| | | Concave part | 0.39 | | Concave part | 0.011 | | | | | |
| Example 8 | 77.9 | Convex part | 0.33 | 0.69 | Convex part | 0.007 | 0.88 | 0.6 | B | 15 | B |
| | | Concave part | 0.48 | | Concave part | 0.008 | | | | | |
| Example 9 | 72.8 | Convex part | 0.31 | 0.39 | Convex part | 0.008 | 0.47 | 0.7 | B | 15 | B |
| | | Concave part | 0.8 | | Concave part | 0.017 | | | | | |
| Example 10 | 67.8 | Convex part | 0.33 | 0.55 | Convex part | 0.007 | 0.58 | 0.3 | A | 17 | A |
| | | Concave part | 0.6 | | Concave part | 0.012 | | | | | |
| Example 11 | 58.4 | Convex part | 0.32 | 0.67 | Convex part | 0.007 | 0.88 | 0.5 | B | 17 | A |
| | | Concave part | 0.48 | | Concave part | 0.008 | | | | | |
| Example 12 | 85.1 | Convex part | 0.33 | 0.35 | Convex part | 0.007 | 0.50 | 0.6 | B | 13 | B |
| | | Concave part | 0.94 | | Concave part | 0.014 | | | | | |

(continued)

| Sample name | Laser microscope Ten-point average surface roughness (Rz) | SPM nanoindentation | | | | | | Haze mater | | Glass adhesion | |
|---|---|---|---|---|---|---|---|---|---|---|---|
| | | Measured part | Composite modulus (GPa) | Ratio of convex part/ concave part*1 | Measured part | Hardness (GPa) | Ratio of convex part/ concave part*2 | Haze (%) | Evaluation | Peel adhesion (N/20 mm) | Evaluation |
| Example 13 | 51.5 | Convex part | 0.33 | 0.47 | Convex part | 0.007 | 0.58 | 0.3 | A | 17 | A |
| | | Concave part | 0.7 | | Concave part | 0.012 | | | | | |
| Reference Example 14 | 28.3 | Convex part | 0.32 | 0.70 | Convex part | 0.007 | 0.88 | 0.8 | B | 15 | B |
| | | Concave part | 0.46 | | Concave part | 0.008 | | | | | |
| Reference Example 15 | 27.8 | Convex part | 0.33 | 0.38 | Convex part | 0.007 | 0.50 | 0.8 | B | 13 | B |
| | | Concave part | 0.87 | | Concave part | 0.014 | | | | | |
| Example 16 | 38.2 | Convex part | 0.32 | 0.45 | Convex part | 0.008 | 0.52 | 0.5 | B | 16 | B |
| | | Concave part | 0.69 | | Concave part | 0.015 | | | | | |
| Example 17 | 69.5 | Convex part | 0.30 | 0.88 | Convex part | .007 | 0.88 | 0.3 | A | 15 | B |
| | | Concave part | 0.34 | | Concave part | 0.008 | | | | | |
| Example 18 | 58.4 | Convex part | 0.32 | 0.67 | Convex part | 0.007 | 0.008 | 0.5 | B | 19 | A |
| | | Concave part | 0.48 | | Concave part | 0.008 | | | | | |

(continued)

| Sample name | Laser microscope Ten-point average surface roughness (Rz) | SPM nanoindentation | | | | | | Haze mater | | Glass adhesion | |
|---|---|---|---|---|---|---|---|---|---|---|---|
| | | Measured part | Composite modulus (GPa) | Ratio of convex part/ concave part*1 | Measured part | Hardness (GPa) | Ratio of convex part/ concave part*2 | Haze (%) | Evaluation | Peel adhesion (N/20 mm) | Evaluation |
| Example 19 | 51.5 | Convex part | 0.32 | 0.76 | Convex part | 0.011 | 0.92 | 0.5 | B | 13 | B |
| | | Concave part | 0.42 | | Concave part | 0.012 | | | | | |
| Comparative Example 1 | 66.6 | Convex part | 0.31 | 0.91 | Convex part | 0.007 | 1.00 | 1.1 | C | 11 | c |
| | | Concave part | 0.34 | | Concave part | 0.007 | | | | | |
| Comparative Example 2 | 43.5 | Convex part | 0.3 | 0.96 | Convex part | 0.007 | 1.00 | 1.4 | C | 10 | C |
| | | Concave part | 0.31 | | Concave part | 0.007 | | | | | |
| Comparative Example 3 | 73.6 | Convex part | 0.32 | 0.91 | Convex part | 0.007 | 1.00 | 1.4 | C | 10 | C |
| | | Concave part | 0.35 | | Concave part | 0.007 | | | | | |
| Comparative Example 4 | 84.4 | Convex part | 0.31 | 0.94 | Convex part | 0.007 | 1.00 | 1.2 | C | 11 | C |
| | | Concave part | 0.33 | | Concave part | 0.007 | | | | | |

EP 3 029 090 B1

(continued)

| Sample name | Laser microscope | SPM nanoindentation | | | | | | Haze mater | | Glass adhesion | |
|---|---|---|---|---|---|---|---|---|---|---|---|
| | Ten-point average surface roughness (Rz) | Measured part | Composite modulus (GPa) | Ratio of convex part/ concave part*1 | Measured part | Hardness (GPa) | Ratio of convex part/ concave part*2 | Haze (%) | Evaluation | Peel adhesion (N/20 mm) | Evaluation |
| Comparative Example 5 | 38.8 | Convex part | 0.31 | 0.94 | Convex part | 0.007 | 1.00 | 1.5 | C | 9 | C |
| | | Concave part | 0.33 | | Concave part | 0.007 | | | | | |
| *1 ratio of convex part/concave part: (composite modulus of the highest part in convex part)/(composite modulus of the lowest part in concave part) *2 ratio of convex part/concave part: (hardness of the highest part in convex part/hardness of the lowest part in concave part) | | | | | | | | | | | |

As indicated by Table 1, the polyvinyl acetal film (interlayer film for laminated glass) of Examples, having a ratio of (composite modulus of the highest part in the convex part) / (composite modulus of the lowest part in the concave part) satisfying the requirements of the present invention, has a low haze of an obtained laminated glass and excellent adhesion to glass, and therefore is excellent in transparency and suppressing thermal cracking. As indicated by Examples, the films having a ten-point average surface roughness of 60.0 to 69.9 Rz have a haze of 0.3% or less. It is indicated that the films have a ratio of (composite modulus of the highest part in the convex part) / (composite modulus of the lowest part in the concave part) of 0.40 to 0.69. In addition, it is indicated that the films having a ratio of (composite modulus of the highest part in the convex part) / (composite modulus of the lowest part in the concave part) of 0.50 to 0.69 are particularly excellent in the haze and the glass adhesion.

The polyvinyl acetal film of the present invention has excellent transparency and can suppress thermal cracking. Therefore, the film having a difference in the composite modulus and the hardness between the concave part and the convex part on the surface in the present invention is used suitably for an interlayer film for laminated glass, requiring excellent adhesion to glass, excellent transparency, and suppression of thermal cracking.

REFERENCE SIGNS LIST

1: surface of a film
2: the highest part in convex part
3: the lowest part in concave part

**Claims**

1. A polyvinyl acetal film comprising a polyvinyl acetal and a plasticizer, wherein
   at least one surface of the film has a ten-point average surface roughness Rz of 30 μm or more, and
   a ratio between a composite modulus (GPa) of a highest part in a convex part and a composite modulus (GPa) of a lowest part in a concave part, calculated by an SPM nanoindentation measurement, is 0.90 or less,
   wherein the ten-point average surface roughness Rz, the composite modulus (GPa) of a highest part in a convex part and the composite modulus (GPa) of a lowest part in a concave part are measured as explained in the description.

2. The polyvinyl acetal film according to claim 1, wherein a ratio between a hardness (GPa) of the highest part in the convex part and a hardness (GPa) of the lowest part in the concave part, calculated by an SPM nanoindentation measurement, is 0.90 or less.

3. The polyvinyl acetal film according to claim 1 or 2, wherein the ratio between the composite modulus (GPa) of the highest part in the convex part and the composite modulus (GPa) of the lowest part in the concave part is 0.70 or less.

4. The polyvinyl acetal film according to any one of claims 1 to 3, wherein the ratio between the hardness (GPa) of the highest part in the convex part and the hardness (GPa) of the lowest part in the concave part is 0.70 or less.

5. The polyvinyl acetal film according to any one of claims 1 to 4, wherein the ratio between the composite modulus (GPa) of the highest part in the convex part and the composite modulus (GPa) of the lowest part in the concave part is 0.40 or more.

6. The polyvinyl acetal film according to any one of claims 1 to 5, wherein the ratio between the hardness (GPa) of the highest part in the convex part and the hardness (GPa) of the lowest part in the concave part is 0.50 or more.

7. An interlayer film for laminated glass, made from the polyvinyl acetal film according to any one of claims 1 to 6.

8. An encapsulant for a solar cell, made from the polyvinyl acetal film according to any one of claims 1 to 6.

9. A laminated glass comprising the interlayer film for laminated glass according to claim 7.

10. A solar cell module comprising the encapsulant for a solar cell according to claim 8.

**Patentansprüche**

1. Polyvinylacetalfilm, umfassend ein Polyvinylacetal und einen Weichmacher, wobei mindestens eine Oberfläche des Films eine Zehn-Punkt-Durchschnittsoberflächenrauigkeit Rz von 30 $\mu$m oder mehr aufweist und ein Verhältnis zwischen einem Kompositmodul (GPa) eines höchsten Teils in einem Konvexteil und einem Kompositmodul (GPa) eines niedrigsten Teils in einem Konkavteil, berechnet durch eine SPM Nanoeindringmessung, 0,90 oder weniger ist, wobei die Durchschnittsoberflächenrauigkeit Rz, der Kompositmodul (GPa) eines höchsten Teils in einem Konvexteil und der Kompositmodul (GPa) eines niedrigsten Teils in einem Konkavteil gemessen werden, wie in der Beschreibung ausgeführt.

2. Polyvinylacetalfilm gemäß Anspruch 1, wobei ein Verhältnis zwischen einer Härte (GPa) des höchsten Teils in dem Konvexteil und einer Härte (GPa) des niedrigsten Teils in dem Konkavteil, berechnet durch eine SPM Nanoeindringmessung, 0,90 oder weniger ist.

3. Polyvinylacetalfilm gemäß Anspruch 1 oder 2, wobei das Verhältnis zwischen dem Kompositmodul (GPa) des höchsten Teils in dem Konvexteil und des Kompositmoduls (GPa) des niedrigsten Teils in dem Konkavteil 0,70 oder weniger beträgt.

4. Polyvinylacetalfilm gemäß einem der Ansprüche 1 bis 3, wobei das Verhältnis zwischen der Härte (GPa) des höchsten Teils in dem Konvexteil und der Härte (GPa) des niedrigsten Teils in dem Konkavteil 0,70 oder weniger beträgt.

5. Polyvinylacetalfilm gemäß einem der Ansprüche 1 bis 4, wobei das Verhältnis des Kompositmoduls (GPa) des höchsten Teils in dem Konvexteil und des Kompositmodul (GPa) des niedrigsten Teils in dem Konkavteil 0,40 oder mehr beträgt.

6. Polyvinylacetalfilm gemäß einem der Ansprüche 1 bis 5, wobei das Verhältnis zwischen der Härte (GPa) des höchsten Teils in dem Konvexteil und der Härte (GPa) des niedrigsten Teils in dem Konkavteil 0,50 oder mehr beträgt.

7. Zwischenschichtfilm für laminiertes Glas, hergestellt aus dem Polyvinylacetalfilm gemäß einem der Ansprüche 1 bis 6.

8. Einkapselung für eine Solarzelle, hergestellt aus dem Polyvinylacetal gemäß einem der Ansprüche 1 bis 6.

9. Laminiertes Glas, umfassend den Zwischenschichtfilm für laminiertes Glas gemäß Anspruch 7.

10. Solarzellenmodul, umfassend die Einkapselung für eine Solarzelle gemäß Anspruch 8.


**Revendications**

1. Film de poly(acétal de vinyle) comprenant un poly(acétal de vinyle) et un plastifiant, dans lequel au moins une surface du film a une rugosité de surface moyenne à dix points Rz de 30 $\mu$m ou plus, et un rapport entre un module composite (GPa) d'une partie la plus haute dans une partie convexe et un module composite (GPa) d'une partie la plus basse dans une partie concave, calculé par une mesure de nanoindentation par microscope-sonde à balayage, est de 0,90 ou moins, dans lequel la rugosité de surface moyenne à dix points Rz, le module composite (GPa) d'une partie la plus haute dans une partie convexe et le module composite (GPa) d'une partie la plus basse dans une partie concave sont mesurés comme expliqué dans la description.

2. Film de poly(acétal de vinyle) selon la revendication 1, dans lequel un rapport entre une dureté (GPa) de la partie la plus haute dans la partie convexe et une dureté (GPa) dans la partie la plus basse dans la partie concave, calculé par une mesure de nanoindentation par microscope-sonde à balayage, est de 0,90 ou moins.

3. Film de poly(acétal de vinyle) selon la revendication 1 ou 2, dans lequel le rapport entre le module composite (GPa) de la partie la plus haute dans la partie convexe et le module composite (GPa) de la partie la plus basse dans la partie concave est de 0,70 ou moins.

4. Film de poly(acétal de vinyle) selon l'une quelconque des revendications 1 à 3, dans lequel le rapport entre la dureté (GPa) de la partie la plus haute dans la partie convexe et la dureté (GPa) de la partie la plus basse dans la partie concave est de 0,70 ou moins.

5. Film de poly(acétal de vinyle) selon l'une quelconque des revendications 1 à 4, dans lequel le rapport entre le module composite (GPa) de la partie la plus haute dans la partie convexe et le module composite (GPa) de la partie la plus basse dans la partie concave est de 0,40 ou plus.

6. Film de poly(acétal de vinyle) selon l'une quelconque des revendications 1 à 5, dans lequel le rapport entre la dureté (GPa) de la partie la plus haute dans la partie convexe et la dureté (GPa) de la partie la plus basse dans la partie concave est de 0,50 ou plus.

7. Film intercouche pour verre stratifié, fait du film de poly(acétal de vinyle) selon l'une quelconque des revendications 1 à 6.

8. Agent d'encapsulation pour pile solaire, fait du film de poly(acétal de vinyle) selon l'une quelconque des revendications 1 à 6.

9. Verre stratifié comprenant le film intercouche pour verre stratifié selon la revendication 7.

10. Module de pile solaire comprenant l'agent d'encapsulation pour une pile solaire selon la revendication 8.

## FIG. 1

# FIG. 2

## LOAD-DISPLACEMENT CURVE

# FIG. 3

BANK SIZE

FIRST ROLL

SECOND ROLL

**EP 3 029 090 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H06127983 A
- JP 2004076458 A
- EP 1953829 A1
- EP 1842647 A1
- EP 1842653 A1
- EP 1233007 A1
- DE 19951444 A1
- WO 2005005123 A1
- WO 9519885 A1
- WO 9944821 A1
- EP 1235683 B

**Non-patent literature cited in the description**

- **W. C. OLIVER ; G. M. PHARR.** *J. Mater. Res.,* 1992, vol. 7, 1564